# EUROPÄISCHE PATENTSCHRIFT

(11) **EP 0 691 239 B1**
(45) Veröffentlichungstag und Bekanntmachung des Hinweises auf die Patenterteilung: **25.11.1998**
(21) Anmeldenummer: 95103412.3
(22) Anmeldetag: 09.03.1995
(51) Int. Cl.: B60N 2/28

(54) **Sicherheitssitz für Verkehrsmittel**
Safety seat for means of transport
Siège de sécurité pour moyens de transport

(30) Priorität: 13.06.1994 DE 9409495 U
(43) Veröffentlichungstag der Anmeldung: 10.01.1996
(73) Patentinhaber: Hundhammer, Konrad, jun., D-82377 Penzberg (DE)
(72) Erfinder: Hundhammer, Konrad, jun., D-82377 Penzberg (DE)
(74) Vertreter: Dr. Elisabeth Jung Dr. Jürgen Schirdewahn Dipl.-Ing. Claus Gernhardt

(56) Entgegenhaltungen:
- EP-A- 0 588 540
- DE-A- 3 445 083
- DE-A- 4 232 124
- FR-A- 2 310 902
- FR-A- 2 551 337
- US-A- 4 711 490

## Beschreibung

Die Erfindung betrifft einen Sicherheitssitz für Verkehrsmittel der im Oberbegriff der Ansprüche 1 und 2 genannten Gattung (siehe zum Beispiel EP-A-0 588 540).

Derartige Sicherheitssitze sind bereits bekannt. Die bekannten Sicherheitssitze sind vielfach als kompakte Einheit ausgebildet und der betreffenden Sitzposition so angepaßt, daß sie als zusätzliche Aggregate auf normale Sitze beispielsweise im Fond eines Kraftfahrzeuges aufgesetzt und dort beispielsweise mittels Gurten fest verankerbar sind, damit sie bei Auffahrunfällen oder auch schon bei schnellem Fahren von Kurven ortfest im Fahrzeug festgehalten werden. Solche Sicherheitssitze haben die Aufgabe, Kinder in der Sitzposition festzuhalten, um zu verhindern, daß sie sich innerhalb des Kraftfahrzeuges stoßen. Sofern die Sicherheitssitze mit zusätzlichen Haltegurten ausgerüstet sind, was an sich ebenfalls bereits bekannt ist (DE-A-3 921 996) kann auch das Nachvorn- oder Nachderseitefallen der auf den Sicherheitssitzen sitzenden Kindern verhindert werden.

Obwohl solche Sicherheitssitze bereits seit langem bekannt sind, wurde vor allem folgender Mangel noch nicht behoben: Sofern anstelle von Kindern Erwachsene im Fond des Wagens Platz nehmen sollen, müssen die Kindersitze aus dem Wagen entfernt werden. Dazu verbleibt im Kofferraum oft nicht genügend Platz.

Auch zusammenklappbare Sicherheitssitze nehmen, sofern sie im Kofferraum Platz finden, dort sehr viel Raum in Anspruch.

Aus der GB-A-2 245 161 ist ein weiterer Sicherheitssitz bekannt, bei dem Sitzteil und Rückenteil jeweils von einer Rohrrahmenkonstruktion gebildet sind, wobei die Rohrrahmen von Sitzteil und Rückenteil durch verbindende Gelenke zum Zusammenklappen des Sicherheitssitzes gegeneinander verschwenkbar sind. Bei diesem Sitz kann zumindest ein Teil der lokalen Kissen aufblasbar sein.

Der Erfindung liegt die Aufgabe zugrunde, Sicherheitssitze der eingangs genannten Gattung mit einfachen Mitteln dadurch zu verbessern, daß sie im Falle der Nichtverwendung auf sehr kleinem Raum zusammenlegbar sind.

Darüber hinaus ist es erwünscht, solche Sicherheitssitze mit einfachen Mitteln an unterschiedliche Größen der Benutzer anpassen zu können.

Die Erfindung ist in den Ansprüchen 1 und 2 gekennzeichnet und in Unteransprüchen sind weitere Ausbildungen derselben beansprucht.

Erfindungsgemäß ist mindestens ein Sitzaggregat des Sicherheitssitzes aufblasbar ausgebildet, wobei das bzw. die Sitzaggregate mit dem größten Volumen aufblasbar sind, da dann im nichtaufgeblasenen Zustand der größte Platzgewinn erreichbar ist und der Sicherheitssitz im nichtaufgeblasenen Zustand leicht im Kofferraum derart beherbergt werden kann, daß dort nur verhältnismäßig wenig Raum in Anspruch genommen wird und genügend weiterer Raum für die Beherbergung anderer Gegenstände übrigbleibt. Es empfiehlt sich daher, vor allem den Sitzteil und die Rückenlehne aufblasbar auszubilden. An sich ist es bereits seit Jahrzehnten bekannt, zum Liegen dienende Luftmatratzen aufblasbar auszubilden und durch Abwinkeln einzelner Segmente daraus auch Sitzgelegenheiten zu schaffen. Für Sicherheitsbedürfnisse in PKWs sind diese jedoch nicht geeignet.

Die einfachste Möglichkeit bei dem erfindungsgemäßen Sicherheitssitz ist die Ausbildung eines Ein-Kammer-Systems, wonach durch Eindrücken von beispielsweise Luft über ein einziges Ventil sämtliche aufblasbaren Sitzaggregate gemeinsam aufgeblasen werden können.

Für manche Zwecke mag es jedoch auch vorteilhaft sein, wenn die einzelnen Sitzaggregate unabhängig voneinander aufgeblasen werden können, d. h. jeweils mindestens eine eigene aufblasbare Kammer aufweisen, um das getrennte Aufblasen zu ermöglichen.

Nach einer besonders bevorzugten Ausbildung der Erfindung ist der Sicherheitssitz bzw. sind einzelne Sitzaggregate je für sich mit mehreren aufblasbaren Kammern ausgerüstet, was folgende Vorteile bietet:
1. Für den Fall, daß eine aufgeblasene Kammer beschädigt wird und Luft verliert, verliert der gesamte Sicherheitssitz bzw. das betreffende Sitzaggregat nicht seine Form und Stabilität, da die anderen Kammern noch aufgeblasen bleiben.
2. Durch das Aufblasen jeweils nur einzelner Kammern kann die Größe der Sitzfläche variiert werden: sind beispielsweise sämtliche Kammern des betreffenden Sitzaggregats aufgeblasen, verbleibt die kleinste Sitzfläche. In diesem Fall dient der Sicherheitssitz für sehr kleine Kinder. Werden dagegen weniger Kammern aufgeblasen, verbleibt eine größere Sitzfläche, so daß der Sicherheitssitz zum Aufsetzen größerer Kinder verwendbar ist. Mit anderen Worten: ein und derselbe Sicherheitssitz ist verwendbar für Kinder unterschiedlicher Größe, ebenso für Erwachsene, die wegen Gebrechlichkeit ebenfalls besonders zu schützen sind.

Die Erfindung ermöglicht unter Anwendung desselben Prinzips auch den Aufbau einer Mehrsitzeinheit, bei dem mehrere einzelne Sicherheitssitze insbesondere nebeneinander oder beispielsweise auch Rücken-an-Rücken anhängend aufblasbar sind.

Das oben schon erwähnte Prinzip der Anwendung mehrerer Kammern, die unabhängig voneinander aufblasbar sind, ist auch anwendbar zur Einstellung verschiedener Positionen des Sicherheitssitzes: so kann der in normaler Sitzstellung aufgeblasene Sicherheitssitz durch zusätzliches Aufblasen einer Zwischenkammer zwischen Sitzteil und Rückenlehne stärker in eine Liegeposition gebracht werden. Bei dieser Ausbildung der Erfindung ist der Sicherheitssitz auch zum Transport Unfallgeschädigter verwendbar.

Der Sicherheitssitz kann zusätzlich auch mit einem weiteren Sicherheitsaggregat in Form eines aufblasbaren Schoßkissens vereint werden, das beispielsweise zwischen die Oberschenkel des Sitzenden und einem Haltebügel bzw. Haltegurt eingesteckt wird.

Außer der Lösung der oben genannten Aufgabe bietet die Erfindung auch den Vorteil, daß die sitzende bzw. liegende Person noch besser gegen Stöße an verhältnismäßig scharfen Kanten geschützt ist, als dies bei den bisher bekannten Sicherheitssitzen der Fall ist. Zu diesem Zweck sollten die mit dem Körper des Sitzenden in Berührung gelangenden Teile des Sicherheitssitzes aus dem aufblasbaren Material bestehen, während andere Teile, beispielsweise eine Grundplatte aus stabilem und festem Material, wie Sperrholz oder nicht ohne weiteres verformbarem Kunststoff, hergestellt sein kann, ohne daß hierdurch im nichtaufgeblasenen Zustand viel Raum in Anspruch genommen wird.

Der Sicherheitssitz kann durch Bänder bzw. Gurte, Reißverschlüsse, Druckknöpfe und/oder Steckverbindungen mit dem Verkehrsmittel, beispielsweise den normalen Sitzen im Kraftfahrzeug, verbunden werden. Ebenso können die Sitzaggregate unter sich mit solchen Verbindungsmitteln verbunden sein. Es versteht sich, daß solche Verbindungsorgane, wie Bänder und Gurte, an entsprechenden Befestigungselementen anbringbar sind, die am Verkehrsmittel, beispielsweise im Innenraum des Kraftfahrzeugs und insbesondere an den üblichen Fahrgastsitzen fest verankert sind. Auch die im Kraftfahrzeuge ohnehin schon befestigten Fahrgast-Haltegurte können zum Befestigen bzw. Festhalten des Sicherheitssitzes als solchen und/oder des darauf Sitzenden Anwendung finden.

Die Wände der aufblasbaren Kammern des Sicherheitssitzes bestehen zweckmäßigerweise aus elastomerem Material, Gummi oder flexiblem Kunststoff, das wahlweise mit Leder, Kunstleder, Textilien oder auch Fell überzogen werden kann.

Bevorzugte Ausführungsbeispiele der Erfindung werden im folgenden anhand der Zeichnung beschreiben, dabei zeigen:
- Fig. 1: eine schematische Aufsicht auf einen Sicherheitssitz;
- Fig. 2: eine Ansicht auf eine andere Ausbildung des Sicherheitssitzes;
- Fig. 3: eine Ansicht auf eine zwei Sitze aufweisende Mehrsitzeinheit;
- Fig. 4: eine Ansicht auf eine weitere Alternative der Erfindung;
- Fig. 5: eine Ansicht - teilweise im Querschnitt - auf eine als Liegewanne ausgebildete Anwendung der Erfindung;
- Fig. 6: eine schematische Ansicht auf ein aufblasbares Schoßkissen;
- Fig. 7: eine schematische Aufsicht auf einen Schalensitz und
- Fig. 8: eine entsprechende Aufsicht mit dem Unterschied, daß auf den Schoß des hier nicht dargestellten Sitzenden ein aufblasbares Schoßkissen aufgelegt und mit einem gleichzeitig als Haltegurt dienenden Verbindungsorgan in Position gehalten wird;
- Fig. 9: eine schematische Ansicht auf ein Sitzkissen und
- Fig. 10: eine schematische Aufsicht auf eine weitere Ausbildung einer Liegewanne.

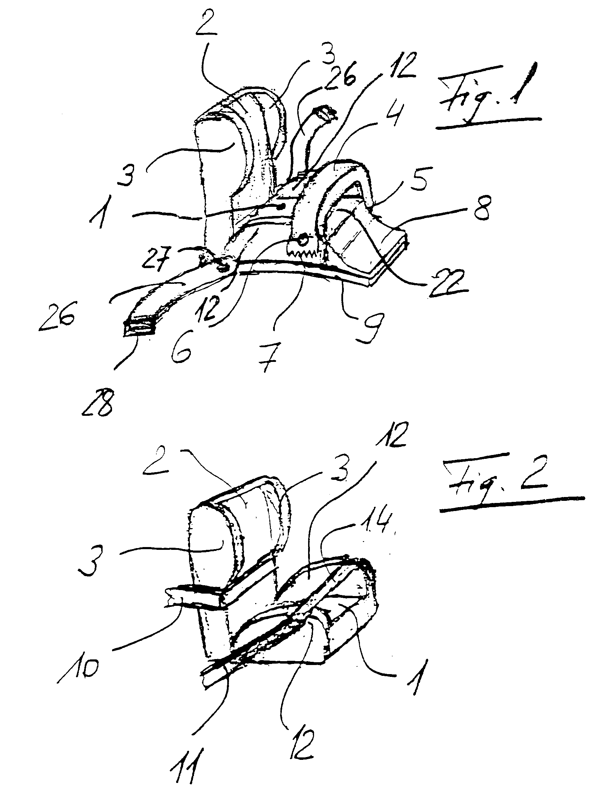

Gemäß Fig. 1 ist der Sitzteil 1 gebildet durch eine im wesentlichen starre Grundplatte 9 aus Kunststoff, auf der ein aufblasbarer Körper aufgeklebt oder aufgeschmolzen ist, der im aufgeblasenen Zustand die in Fig. 1 dargestellte Sitzfläche bildet, von der sich nach vorn ein Ansatzteil 8 erstreckt, welches einen allmählichen Übergang von der eigentlichen Sitzfläche zum vorderen Rand der Grundplatte 9 bildet und eine später noch erläuterte Funktion hat. Auf einer Seite des Sitzteils 1 (in Fig. 1 an der dem Betrachter abgewandten Seite) ist seitlich am Sitzteil 1 ein ebenfalls aufblasbarer Haltebügel 4 an einer Anlenkstelle 5 angelenkt. Der Haltebügel 4 übergreift den Sitzteil 1 unter Freilassen eines Durchgangs 22, durch den die Beine des Sitzenden hindurchsteckbar sind. Der Haltebügel 4 ist an der der Anlenkung 5 entgegengesetzten Seite des Sitzteils 1 dadurch mit diesem verbunden, daß er einerseits mittels eines Druckknopfes 6 an den Sitzteil 1 angedrückt und andererseits mittels eines nur schematisch dargestellten Reißverschlusses 7 am äußeren Ende an einem entsprechenden Halteteil an der Seite der Sitzfläche festgezurrt ist. Insofern ist nach dem Platznehmen beispielsweise eines Kindes der Haltebügel 4 in die in Fig. 1 dargestellte geschlossene Stellung bringbar und fest verankerbar, wodurch die Beweglichkeit des Sitzenden nach den Seiten und nach vorn begrenzt ist. Am hinteren Ende des Sitzteils 1 ist eine ebenfalls aufblasbare Rückenlehne 5 befestigt, die an ihren seitlichen Enden mit ebenfalls aufblasbaren Seitenstützen 3 versehen ist, um auch die seitliche Bewegbarkeit des Oberkörpers des Sitzenden, beispielsweise dessen Schultern, zu begrenzen. Das Aufblasen erfolgt durch hier nicht gezeigte Ventile, sofern beispielsweise der Sitzteil 1, der Haltebügel 4, die Rückenlehne 2 und die Seitenstützen 3 separat aufblasbar sein sollen; bei dieser Ausbildung würde jedes dieser Sitzaggregate mindestens eine separate aufblasbare Kammer bilden. Nach einer anderen Version können die Hohlräume der einzelnen Sitzaggregate auch untereinander so verbunden sein, daß der Sicherheitssitz nur ein einziges Ventil benötigt, durch das sämtliche Sitzaggregate aufblasbar sind. Die untere Fläche der Grundplatte 9 ist leicht konkav gekrümmt, um sie der Auflagefläche insbesondere dem in beim Kraftfahrzeug eingebauten Sitzfläche möglichst gut anzupassen. Auch der Sitzteil 1 ist seitlich durch die Seitenstützen 12 begrenzt. Der Sicherheitssitz kann aus der in Fig. 1 gezeigten Position auf geringen Raumbedarf zusammengelegt werden, indem das Kammersystem entlüftet wird, wodurch die aufgeblasenen Teile in sich zusammenfallen und als verhältnismäßig dünnes Paket auf die Grundplatte 9 aufgelegt werden können, wodurch nur wenig Stauraum im Kofferraum des Kraftfahrzeugs benötigt wird.

Die Grundplatte 9 erstreckt sich mit dem Ansatzteil 8 deshalb weiter nach vorn als benötigt wäre, um den Sicherheitssitz zusätzlich zwischen der Rückenlehne 2 des im Kraftfahrzeug eingebauten normalen Sitzes, auf dem der Sicherheitsitz aufgesetzt wird, und der Rückseite des Vordersitzes abzustützen. In diesem Fall stößt der vordere Rand der Grundplatte 9 und des Teils 8 an der Rückseite des Vordersitzes an, indem dieser genügend weit zurückgefahren wird.

Im hinteren Teil der Seitenränder des Sitzteils 1, insb. an den Seitenrändern der Grundplatte 9, d.h. im Übergangsbereich zur Rückenlehne 2, ist zusätzlich je ein Ende 27 des Sicherheitsgurtes 26 angelenkt, dessen anderen Enden 28 ein Verbindungsschloß 28 aufweisen.

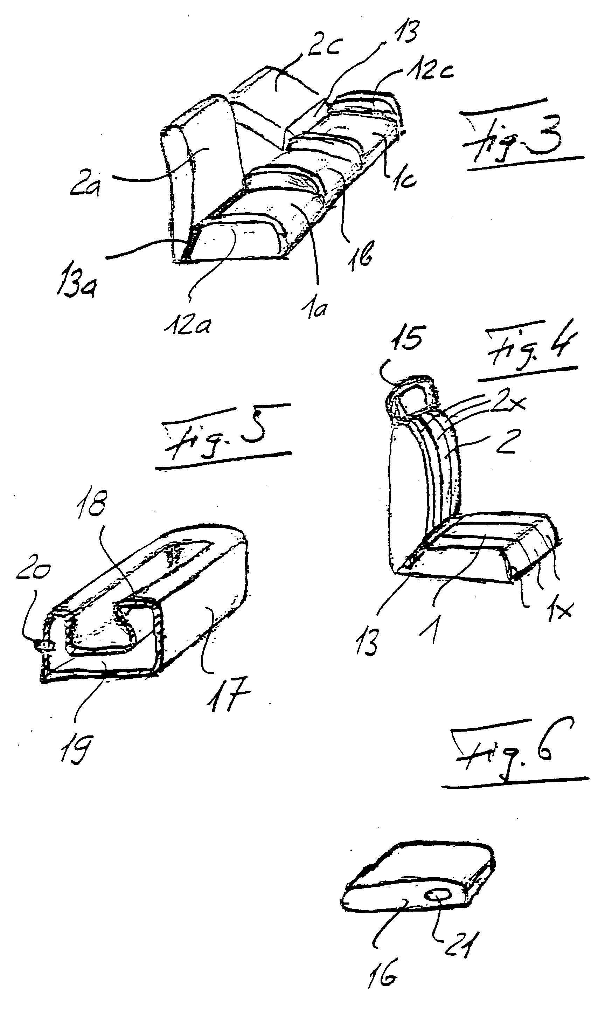

Bei der Ausbildungform von Fig. 2 fehlt dieser Abstütz- bzw. Ansatzteil 8 und fehlt auch der Haltebügel 4. Statt dessen dient ein üblicher Haltegurt 14 nicht nur zum Festhalten des Sitzteils 1 auf dem Sitz, sondern auch zum Festhalten des Sitzenden, wozu die als Verbindungsorgane 11 dienenden Enden des Haltegurtes 14 an entsprechenden Befestigungselementen befestigt sind, die am Verkehrsmittel, beispielsweise dem Kfz, verankert sind. Zur besseren Führung kann der Haltegurt 14 in Aussparungen an den als Armlehnen dienenden oberen Rändern der Seitenstützen 12 des Sitzteils 1 eingesetzt sein.

Die Rückenlehne 2 ist dagegen unterhalb der Seitenstützen 3 mittels eines gurtförmigen Verbindungsorgans 10 ebenfalls an Befestigungselementen im Kraftfahrzeug befestigt, so daß der Sicherheitssitz nicht nach vorn rutschen kann, wenn das Fahrzeug plötzlich abbremst oder auf einen Widerstand auffährt.

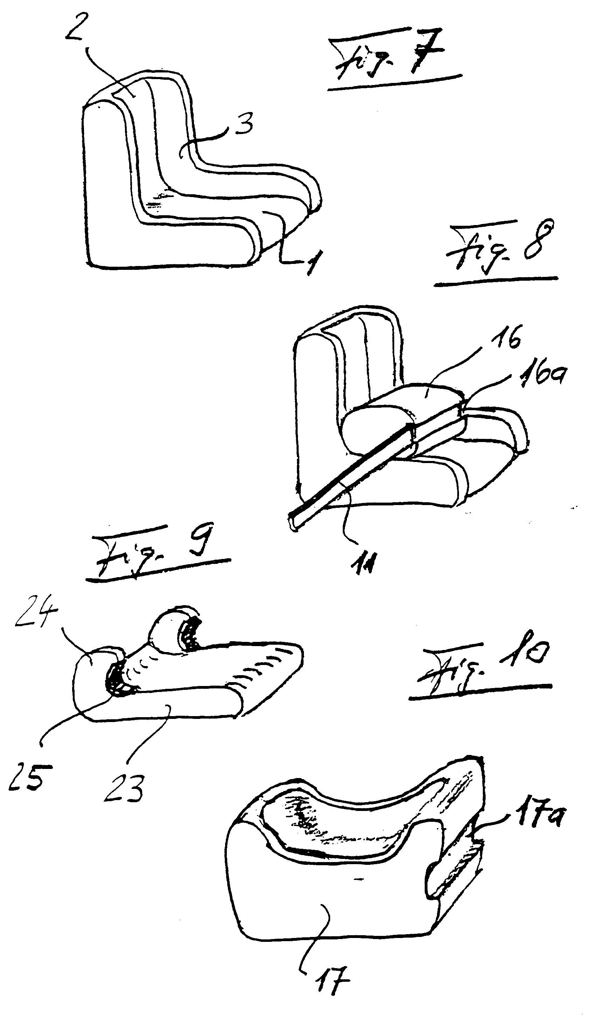

Bei der Auführungsform der Mehrsitzeinheit von Fig. 3 dient für die beiden Sitzteile 1a und 1c sowie den dazwischen befindlichen Verbindungsteil 1b ein Ein-Kammer-System als aufblasbarer Sitzkörper, von dem sich die Seitenstützen 12a, 12c nach oben erstrecken und mit dem Sitzteil gemeinsam aufblasbar sind. Am hinteren unteren Ende der Sitzteile 1a bis 1c sind die Rückenlehnen 2a, 2c derart angelenkt, daß sie aus der aufrechten Position des Sitzteils 2a in die weitgehend zurückgelehnte Stellung des Sitzteils 2c schwenkbar sind. Dieses Verschwenken erfolgt beispielsweise auf folgende Weise: Nachdem die Sitzteile 1a bis 1c und die Rückenlehnen 2a, 2c getrennt aufgeblasen sind, wird die zwischen dem Sitzteil 1a und der Rückenlehne 2a im zusammengefalteten Zustand gezeigte Zwischenkammer 13a zu der keilförmigen Konfiguration 13 gesondert aufgeblasen, wodurch die hintere Rückenlehne 2c in die "Liegeposition" gedrückt wird.

Bei der Ausbildung von Fig. 4 weist die Rückenlehne 2 oben eine ebenfalls aufblasbare Kopfstütze 15 - hier in halbkreisförmiger Ausbildung - auf. Im Unterschied zu den vorher erläuterten Ausbildungen der Erfindung weist der Sicherheitssitz nach Fig. 4 eine zusätzliche Sicherheitsfunktion dadurch auf, daß sowohl der Sitzteil 1 als auch die Rückenlehne 2 in mehrere Einzelkammern 1x, 2x unterteilt sind. Wird eine Einzelkammer 1x, 2x undicht, fällt das betreffende Sitzaggregat nicht zusammen, sondern wird von den anderen Einzelkammern weiterhin im aufgeblasenen Zustand gehalten.

Bei der Ausbildung von Fig. 5 ist der Sicherheitssitz derart umgestaltet, daß er als Liegewanne 17 dient, um beispielsweise ein Baby darin zu beherbergen. Bei dieser Ausbildung weist die Liegewanne 17 eine Einzelkammer, bestehend aus dem Hohlraum 19 und der Kunststoffwandung auf, welche mit einem Ventil 20 versehen ist, um die Liegewanne 17 aus der nicht dargestellten zusammengelegten Form in die in Fig. 5 dargestellte aufgeblasene Wannenform zu bringen. An einer Längsseite ist die Liegewanne 17 innen mit einer Nase 18 versehen, welche zum zusätzlichen Schutz gegen Herausrollen in Fahrtrichtung dient.

Gemäß Fig. 6 ist ein Schoßkissen 16 im aufgeblasenen Zustand gezeigt, bei dem das nicht dargestellte Ventil durch eine Ventilabdeckung 21 nach der Seite abgedeckt ist, damit das Ventil nicht störend im Wege steht. Dieses Schoßkissen kann als "Polster" zwischen dem Sitzenden und einem Haltegurt 14 oder Haltebügel 4 verwendet werden. Dabei kann das Schoßkissen 16 je nach Umfang des Aufblasens an unterschiedliche Zwischenräume angepaßt werden, ebenso wie die Seitenstützen 3 unterschiedlich stark aufgeblasen werden, um den Freiraum des Sitzenden - je nach Größe desselben - mehr oder weniger einzuengen. Der Sitzende ist dann praktisch nach allen Seiten von aufblasbaren Teilen gehalten, die sich aufgrund ihrer Biegbarkeit auch zu einem gewissen Ausmaß an die betreffenden Körperteile des Sitzenden anpassen und diesen gewissermaßen "schmiegend" umgeben.

Gemäß Fig. 7 besteht der Schalensitz aus einer einstückigen Einheit, bei der für den Sitzteil 1, die Rückenlehne 2 und die beiden Seitenstützen 3 eine einzige Kammer verwendet ist. Diese kann auch durch Steppnähte unterbrochen sein; in diesem Fall wird aber eine Druckausgleichsverbindung zwischen den durch Steppnähte bzw. Versiegelungsnähte gebildeten Einzelkammern hergestellt. Im Falle der Anwendung von Steppnähten versteht es sich, daß diese luftundurchlässig sein müssen, damit der Schalensitz im aufgeblasenen Zustand verbleibt. Im Falle der Verwendung dieses Schalensitzes kann nach dem Platznehmen des Kindes auf dessen Schoß ein Schoßkissen 16 beispielsweise gemäß Fig. 8 aufgelegt und mittels eines Verbindungsorgans 11 in Form eines Haltegurts in Position gehalten werden, der in eine rinnenförmige Aussparung 16a an der Vorderseite des Schoßkissens 16 eingesetzt ist.

Die Erfindung ermöglicht auch in einfacher Weise die Erhöhung der Sitzposition, beispielsweise nach dem Ausführungsbeispiel der Fig. 9: Dort ist ein aufblasbares Sitzkissen 23 gezeigt, an dessen hinteren beiden Ecken hochstehende Wülste 24 dargestellt sind, die zweckmäßigerweise an den nach vorn weisenden konkaven Aussparungen mit Verstärkungselementen 25 versehen sind, um ein Verbindungsorgan zum Festhalten des Sitzkissens in der gewünschten Position einzulegen.

Bei der alternativen Form einer Liegewanne 17 nach Fig. 10 ist an der Frontseite ebenfalls eine rinnenförmige Aussparung 17a zum Einlegen eines Verbindungsorgans bzw. Haltegurtes vorgesehen.

Es versteht sich, daß der erfindungsgemäße Sicherheitssitz auch in anderen Verkehrsmitteln, beispielsweise Flugzeugen, Autobussen, Vergnügungsparks, d.h. überall dort angewendet werden kann, wo der Sitzende bzw. Liegende gegen bestimmte Bewegungen bzw. gegen "Herausfallen" gesichert werden soll, ohne daß sein Sitzkomfort beeinträchtigt wird. Die Aufblasbarkeit ermöglicht auch die zusätzliche Anpassbarkeit des Sicherheitssitzes.

Schließlich können auch andere Sitzaggregate als der Sitzteil durch Verstärkungskörper, wie eine formstabile Grundplatte oder Versteifungsleisten, verstärkt werden, da sich diese im nicht aufgeblasenen Zustand flachlegen lassen und nur wenig Raum beanspruchen.

## Patentansprüche

1. Sicherheitssitz für Verkehrsmittel, wie Kraftfahrzeuge und Flugzeuge, mindestens mit einem auf eine Sitzfläche eines Sitzes des Verkehrsmittels aufsetzbaren Sitzteil (1), einem an die Rückenlehne des Sitzes des Verkehrsmittels anlehnbaren Rückenteil (2) und Sicherheitsvorrichtungen, wie Seitenstützen (3), Haltebügel (4) und/oder Haltegurte, wobei der Sitzteil (1), der Rückenteil (2) und die Sicherheitsvorrichtungen zusammen Sitzaggregate bilden und eine den Sitzaggregaten zugeordnete Aufblaseinrichtung vorgesehen ist,
dadurch **gekennzeichnet,** daß
nur das Sitzaggregat mit dem größten Volumen aufblasbar ist und im entlüfteten Zustand in sich zusammenfällt, wodurch der Sicherheitssitz als Paket zusammenlegbar wird.

2. Sicherheitssitz für Verkehrsmittel, wie Kraftfahrzeuge und Flugzeuge, mindestens mit einem auf eine Sitzfläche eines Sitzes des Verkehrsmittels aufsetzbaren Sitzteil (1), einem an die Rückenlehne des Sitzes des Verkehrsmittels anlehnbaren Rückenteil (2) und Sicherheitsvorrichtungen, wie Seitenstützen (3), Haltebügel (4) und/oder Haltegurte, wobei der Sitzteil (1), der Rückenteil (2) und die Sicherheitsvorrichtungen zusammen Sitzaggregate bilden und eine Aufblaseinrichtung für mehrere dieser Sitzaggregate einschließlich Sitzteil (1) und Rückenteil (2) vorgesehen ist,
dadurch gekennzeichnet, daß mindestens der Sitzteil (1) eine Grundplatte (9) aus stabilem und festem Material aufweist, deren untere Fläche im Falle des Sitzteils (1) als Auflagefläche auf der Sitzfläche des Sitzes des Verkehrsmittels vorgesehen ist.

3. Sicherheitssitz nach Anspruch 2, dadurch gekennzeichnet, daß nur der Sitzteil (1) eine Grundplatte (9) aufweist.

4. Sicherheitssitz nach Anspruch 2 oder 3, dadurch gekennzeichnet, daß die untere Flache des Sitzteils (1) in Anpassung an die Sitzfläche eines Sitzes des Verkehrsmittels konkav gekrümmt ist.

5. Sicherheitssitz nach einem der Ansprüche 2 bis 4, dadurch gekennzeichnet, daß die jeweiligen Sitzaggregate gemeinsam aufblasbar sind.

6. Sicherheitssitz nach einem der Ansprüche 2 bis 4, dadurch gekennzeichnet, daß mindestens ein Sitzaggregat gesondert aufblasbar ist.

7. Sicherheitssitz nach einem der Ansprüche 1 bis 6, dadurch gekennzeichnet, daß mindestens ein einzelnes Sitzaggregat mehrere gesondert aufblasbare Kammern aufweist.

8. Sicherheitssitz nach einem der Ansprüche 1 bis 7, gekennzeichnet durch eine aufblasbare Zwischenkammer zwischen Sitzteil und Rückenteil, mittels dessen deren relative Winkelstellung einstellbar ist.

9. Sicherheitssitz nach einem der Ansprüche 1 bis 8, gekennzeichnet durch ein aufblasbares Schoßkissen.

10. Sicherheitssitz nach einem der Ansprüche 1 bis 9, dadurch gekennzeichnet, daß mehrere Sicherheitssitze zu einer Mehrsitzeinheit integriert sind.

11. Sicherheitssitz nach einem der Ansprüche 1 bis 10, dadurch gekennzeichnet, daß Sitzaggregate untereinander durch Reißverschlüsse (7), Bänder bzw. Gurte, Druckknöpfe (6) und/oder Steckverbindungen verbindbar sind.

12. Sicherheitssitz nach einem der Ansprüche 1 bis 11, dadurch gekennzeichnet, daß ein Sicherheitsgurt (14) am Sitz des Verkehrsmittels als Sicherheitsgurt des Sicherheitssitzes vorgesehen ist.

13. Sicherheitssitz nach Anspruch 12, dadurch gekennzeichnet, daß an den oberen Rändern von Seitenstützen (12) des Sitzteils (1) Aussparungen zur Führung des Sicherheitsgurts (14) vorgesehen sind.

14. Sicherheitssitz nach einem der Ansprüche 2 bis 13, dadurch gekennzeichnet, daß die Rückenlehne und gegebenenfalls die Seitenstützen im entlüfteten Zustand derart zusammenfällt bzw. -fallen, daß sie am Sicherheitssitz als Paket zusammenlegbar ist bzw. sind.

15. Sicherheitssitz nach Anspruch 14, dadurch gekennzeichnet, daß mindestens ein anderes Sitzaggregat als der Sitzteil mit Versteifungsleisten versehen sind.

## Claims

1. Safety seat for means of transport, such as motor vehicles and airplanes, comprising at least one seat part (1) to be put on a seat surface of a seat of the means of transport, a back part (2) to be leaned against the back of the seat of the means of transport, and safety devices, such as side supports (3), holding bows (supporting bows, safety bows) (4) and/or safety belts, the seat part (1), the back part (2) and the safety devices together forming seat units, and an inflating device allocated to the seat units being provided,
**characterized** in that
only the seat unit having the greatest volume is inflatable and collapses in the deflated state which makes the safety seat foldable as a packet.

2. Safety seat for means of transport, such as motor vehicles or airplanes, comprising at least one seat part (1) to be put on a seat surface of a seat of the means of transport, a back part (2) to be leaned against the back of the seat of the means of transport, and safety devices, such as side supports (3), holding bows (supporting bows, safety bows) (4) and/or safety belts, the seat part (1), the back part (2) and the safety devices together forming seat units and an inflating device for a plurality of these seat units including the seat part (1) and the back part (2) being provided,
characterized in that at least the seat part (1) comprises a base plate (9) made of a solid and firm material, the lower surface of which is, in the case of the seat part (1), provided as a bearing surface on the seat surface of the means of transport.

3. Safety seat according to claim 2, characterized in that only the seat part (1) comprises a base plate (9).

4. Safety seat according to claim 2 or 3, characterized in that the lower surface of the seat part (1) is dished or concavely bent to be adapted to the seat surface of a seat of the means of transport.

5. Safety seat according to one of claims 2 to 4, characterized in that the respective seat units can be commonly inflated.

6. Safety seat according to one of claims 2 to 4, characterized in that at least one seat unit can be inflated separately.

7. Safety seat according to one of claims 1 to 6, characterized in that at least one individual seat unit comprises several chambers being separately inflatable.

8. Safety seat according to one of claims 1 to 7, characterized by an inflatable intermediate chamber between the seat part and the back part with the aid of which their relative angular position is adjustable.

9. Safety seat according to one of claims 1 to 8, characterized by an inflatable lap cushion.

10. Safety seat according to one of claims 1 to 9, characterized in that a plurality of safety seats is integrated to form a multiple seat unit.

11. Safety seat according to one of claims 1 to 10, characterized in that seat units are connectable to each other by zippers (7), ribbons or belts, snap fasteners (6) and/or plug and socket connections.

12. Safety seat according to one of claims 1 to 11, characterized in that a safety belt (14) is provided at the seat of the means of transport serving as a safety belt for the safety seat.

13. Safety seat according to claim 12, characterized in that at the upper edges of the side supports (12) of the seat part (1) recesses are provided for guiding the safety belt (14).

14. Safety seat according to one of claims 2 to 13, characterized in that the back of the seat and optionally the side supports collapse(s) when being deflated such that it (they) can be folded as a packet at the safety seat.

15. Safety seat according to claim 14, characterized in that at least one other seat unit as the seat part is provided with cleats.

## Revendications

1. Siège de sécurité pour appareils de transport, tels que des voitures automobiles et des avions, comprenant au moins une partie d'assise (1) susceptible d'être posée sur une surface d'assise d'un siège de l'appareil de transport, une partie de dossier (2) susceptible d'être adossée à la partie de dossier du siège de l'appareil de transport, et des organes de sécurité, tels que des appuis latéraux (3), des étriers de maintien (4) et/ou des ceintures de maintien, dans lequel la partie d'assise (1), la partie de dossier (2) et les organes de sécurité forment ensemble des unités de siège, et il est prévu un dispositif de gonflage associé aux unités de siège,
caractérisé en ce que
seule l'unité de siège est susceptible d'être gonflée avec le volume le plus élevé, et se rétracte sur elle-même à l'état dégonflé, grâce à quoi le siège de sécurité peut être rangé sous forme d'un paquet.

2. Siège de sécurité pour appareils de transport, tels que des voitures automobiles et des avions, comprenant au moins une partie d'assise (1), susceptible d'être posée sur une surface d'assise d'un siège de l'appareil de transport, une partie de dossier (2) susceptible d'être adossée à la partie de dossier du siège de l'appareil de transport, et des organes de sécurité, tels que des appuis latéraux (3), des étriers de maintien (4) et/ou des ceintures de maintien, dans lequel la partie d'assise (1), la partie de dossier (2) et les organes de sécurité forment ensemble des unités de sièges, et en ce qu'il est prévu un dispositif de gonflage pour plusieurs de ces unités de siège, y compris leur partie d'assise (1) et leur partie de dossier (2),
caractérisé en ce que
la partie d'assise (1) au moins comporte une plaque de base (9) en un matériau stable et solide, dont la face inférieure est prévue, dans le cas de la partie d'assise (1), sous forme d'une surface d'appui sur la surface d'assise du siège de l'appareil de transport.

3. Siège de sécurité selon la revendication 2, caractérisé en ce que seule la partie d'assise (1) comporte une plaque de base (9).

4. Siège de sécurité selon l'une ou l'autre des revendications 2 et 3, caractérisé en ce que la face inférieure de la partie d'assise (1) est incurvée sous forme concave de façon adaptée à la surface d'assise d'un siège de l'appareil de transport.

5. Siège de sécurité selon l'une des revendications 2 à 4, caractérisé en ce que les unités de siège respectives sont susceptibles d'être gonflées conjointement.

6. Siège de sécurité selon l'une des revendications 2 à 4, caractérisé en ce qu'au moins une unité de siège est séparément gonflable.

7. Siège de sécurité selon l'une des revendications 1 à 6, caractérisé en ce qu'au moins une unité de siège individuelle comporte plusieurs chambres séparément gonflables.

8. Siège de sécurité selon l'une des revendications 1 à 7, caractérisé par une chambre intermédiaire gonflable entre la partie d'assise et la partie de dossier, au moyen de laquelle leur position angulaire relative est réglable.

9. Siège de sécurité selon l'une des revendications 1 à 8, caractérisé par un coussin de siège gonflable.

10. Siège de sécurité selon l'une des revendications 1 à 9, caractérisé en ce que plusieurs sièges de sécurité sont intégrés pour former une unité à plusieurs sièges.

11. Siège de sécurité selon l'une des revendications 1 à 10, caractérisé en ce que les unités de siège sont susceptibles d'être reliées les unes aux autres par des fermetures éclair (7), des bandes, des sangles, des boutons-pression (6) et/ou par des liaisons enfichables.

12. Siège de sécurité selon l'une des revendications 1 à 11, caractérisé en ce qu'il est prévu une ceinture de sécurité (14) sur le siège de l'appareil de transport en tant que ceinture de sécurité du siège de sécurité.

13. Siège de sécurité selon la revendication 12, caractérisé en ce qu'il est prévu des évidements pour le guidage de la ceinture de sécurité (14) au niveau des bordures supérieures d'appuis latéraux (12) de la partie d'assise (1).

14. Siège de sécurité selon l'une des revendications 2 à 13, caractérisé en ce que le dossier, et le cas échéant les appuis latéraux, se contracte(nt) à l'état dégonflé de telle façon qu'il(s) peut(vent) être rangé(s) sous forme de paquet sur le siège de sécurité.

15. Siège de sécurité selon la revendication 14, caractérisé en ce qu'au moins une unité de siège autre que la partie d'assise est pourvue de barrettes de rigidification.
